# EUROPÄISCHE PATENTANMELDUNG

(11) **EP 1 512 567 A2**
(43) Veröffentlichungstag der Anmeldung: **09.03.2005**
(21) Anmeldenummer: 04020982.7
(22) Anmeldetag: 03.09.2004
(51) Int. Cl.: B60J 7/057, B60J 7/02

(54) **Führung eines Fahrzeugteils mit einer Abdeckung**

(30) Priorität: 07.09.2003 DE 10341527
(71) Anmelder: Webasto AG, 82131 Stockdorf (DE)
(72) Erfinder: Färber, Manfred, 82407 Wielenbach (DE)

(57) **Zusammenfassung**

Die Erfindung betrifft eine Führung eines Fahrzeugteils (5, 5'), das mittels eines Lagerteils (24, 29, 31, 42) entlang der eine sichtseitige Abdeckung aufweisenden Führung bewegbar gelagert ist. Eine einfache und dennoch robuste Abdeckung ist dadurch gebildet, daß die Abdeckung als im wesentlichen starre und bewegbare Blende (60) gebildet ist, die mittels einer Verstelleinrichtung zwischen einer Abdeckstellung, in der sie die Führung (22) sichtseitig abdeckt, und einer Offenstellung, in der sie von der Führung (22) derart weg bewegt ist, daß sie die Bewegung des Lagerteils (24) entlang der Führung (22) gestattet, verstellbar ist.

## Beschreibung

Die Erfindung betrifft eine Führung eines Fahrzeugteils, das mittels eines Lagerteils entlang der eine sichtseitige Abdeckung aufweisenden Führung bewegbar gelagert ist.

Aus der EP 1 232 888 A1 ist ein öffnungsfähiges Fahrzeugdach bekannt, das Führungen für eine bewegbaren Deckel aufweist. Um die Führungen vor Verschmutzung zu schützen, wird vorgeschlagen, daß jede Führung mittels einer bewegbaren Abdeckeinrichtung verschlossen wird. Wenn ein den Deckel tragender Gleiter entlang der Führung bewegt wird, wird die Abdeckeinrichtung aus ihrer Abdeckstellung bewegt. Die Abdeckeinrichtung ist beispielsweise ein verformbares Element, das unter Verformung von dem Gleiter seitlich weggedrückt wird, oder ein entlang der Führung ein- und ausschiebbares und auf- bzw. abwickelbares Band.

Aus der US 4,349,215 ist ein entlang einer Führung in einem Fahrzeug verschiebbar gelagerter Sicherheitsgurt beschrieben. Die Führung ist auf der dem Fahrzeuginnenraum zugewandten Seite mittels einer dekorativen Abdeckung und einer Bürste abgedeckt, so daß ein Lagerarm des Sicherheitsgurtes die Borsten der Bürste umbiegen kann, wenn er entlang der Führung bewegt wird. Derartige Bürsten können jedoch, insbesondere wenn sie im Fahrzeugaußenbereich verwendet werden, verschmutzen und die Borsten können bei häufiger Umbiegung an ihrem Befestigungsbereich abknicken.

Aufgabe der Erfindung ist es, eine eingangs genannte Führung zu schaffen, die bei einfachem Aufbau eine gute Funktionsfähigkeit aufweist und bei unterschiedlichen Führungen verwendet werden kann.

Diese Aufgabe wird bei der oben genannten Führung erfindungsgemäß dadurch gelöst, daß die Abdeckung als im wesentlichen starre und bewegbare Blende gebildet ist, die mittels einer Verstelleinrichtung zwischen einer Abdeckstellung, in der sie die Führung sichtseitig abdeckt, und einer Offenstellung, in der sie von der Führung derart weg bewegt ist, daß sie die Bewegung des Lagerteils entlang der Führung gestattet, verstellbar ist.

Vorteilhafte Ausgestaltungen der Erfindung sind in den Unteransprüchen angegeben.

Die Blende muß somit nicht verformt werden, sondern kann als starres Bauteil bewegt werden. Damit eignet sie sich auch für langen Betrieb im Fahrzeuginnenraum, wobei sie beispielsweise eine mit dem Fahrzeughimmel abgestimmte Oberfläche aufweist, deren Güte mangels Verformung erhalten bleibt.

Zweckmäßigerweise ist die Blende um eine in etwa parallel zur Führung verlaufende Schwenkachse verschwenkbar. Damit bewegt sie sich beim Verschwenken in gleichem Abstand zur Führung und benötigt wenig Schwenkraum.

Wenn die Blende zumindest eine Aussparungen aufweist, kann ein Lagerteil des Fahrzeugteils bei geschlossener Blende durch die Aussparung greifen.

Vorzugsweise ist die Blende für eine Führung für zwei seitlich verschiebbare Seitenholme vorgesehen und in der äußeren Endstellung und in der inneren Endstellung der Seitenholme ist die Blende geschlossen. Jedoch eignet sich die Blende für vielfältige unterschiedliche Einsatzfälle bei Fahrzeugteilen wie auch Schiebedächern oder anderen bewegbaren Flächenteilen.

Nachfolgend wird ein Ausführungsbeispiel der eine Abdeckung aufweisenden Führung für bewegbare Seitenholme eines Fahrzeugdachs unter Bezugnahme auf die Zeichnung näher erläutert. Es zeigt:
- Fig. 1: in perspektivischer Draufsicht ein Personenfahrzeug mit einem Fahrzeugdach und einem Deckel, der zur Freigabe einer Dachöffnung nach hinten in eine Offenstellung bewegt ist;
- Fig. 2: in perspektivischer Draufsicht eine Dachrahmenanordnung mit zwei bewegbaren Seitenholmen, die an zwei Dachquerbauteilen in Dachquerrichtung verschiebbar gelagert sind;
- Fig. 3: in Seitenansicht die Dachrahmenanordnung mit dem linken bewegbaren Seitenholm;
- Fig. 4: in perspektivischer Draufsicht in vergrößerter Darstellung das Vorderende des linken bewegbaren Seitenholms mit seiner Lagereinrichtung am Windlauf;
- Fig. 5: in perspektivischer Draufsicht in vergrößerter Darstellung das Hinterende des linken bewegbaren Seitenholms mit seiner Lagereinrichtung am hinteren Dachquerbauteil;
- Fig. 6: in perspektivischer Draufsicht gemäß Fig. 2 die Dachrahmenanordnung mit dem linken bewegbaren Seitenholm, der in seiner Außenstellung um seine Längsachse verschwenkt ist;
- Fig. 7: in perspektivischer Draufsicht in vergrößerter Darstellung das Hinterende des linken bewegbaren Seitenholms mit seiner Lagereinrichtung am hinteren Dachquerbauteil in einer ersten einwärts bewegten ZWischenstellung;
- Fig. 8: in perspektivischer Draufsicht gemäß Fig. 2 die Dachrahmenanordnung mit den beiden bewegbaren Seitenholmen in einer weiteren einwärts bewegten Zwischenstellung;
- Fig. 9: in perspektivischer Draufsicht in vergrößerter Darstellung das Hinterende des linken bewegbaren Seitenholms mit seiner Lagereinrichtung in der Zwischenstellung gemäß Fig. 8;
- Fig. 10: in perspektivischer Draufsicht gemäß Fig. 2 die Dachrahmenanordnung mit den beiden bewegbaren Seitenholmen in ihrer Innen- oder Endstellung;
- Fig. 11: in perspektivischer Draufsicht die Dachrahmenanordnung mit den beiden bewegbaren Seitenholmen in ihrer Außenstellung und einer geschlossenen Blende, die eine hintere Führung der Seitenholme abdeckt;
- Fig. 12: in perspektivischer Draufsicht gemäß Fig. 11 die Dachrahmenanordnung mit den beiden bewegbaren Seitenholmen in ihrer Innen- oder Endstellung und der wiederum geschlossenen Blende zum Abdecken der hinteren Führung;
- Fig. 13: in einer Vorderansicht die Dachrahmenanordnung mit den beiden bewegbaren Seitenholmen in einer Zwischenstellung und der geöffneten Blende;
- Fig. 14: in perspektivischer Draufsicht das Hinterende des Seitenholms und das linken Ende der hinteren Führung mit einer Betätigungseinrichtung für die Blende, wobei der Seitenholm in seiner Außenstellung entsprechend Fig. 11 angeordnet ist;
- Fig. 15: in perspektivischer Draufsicht gemäß Fig. 14 das Hinterende des Seitenholms, der eine erste Einwärtsbewegung ausgeführt hat;
- Fig. 16: in perspektivischer Draufsicht gemäß Fig. 15 das Hinterende des Seitenholms, der eine weitere Einwärtsbewegung ausgeführt hat, wobei die Blende in ihre Offenstellung verschwenkt wird;
- Fig. 17: in perspektivischer Draufsicht das Hinterende des Seitenholms nach einer weiteren Einwärtsbewegung bei geöffneter Blende;
- Fig. 18: in perspektivischer Draufsicht der Mittelbereich der hinteren Führung bei geöffneter Blende;

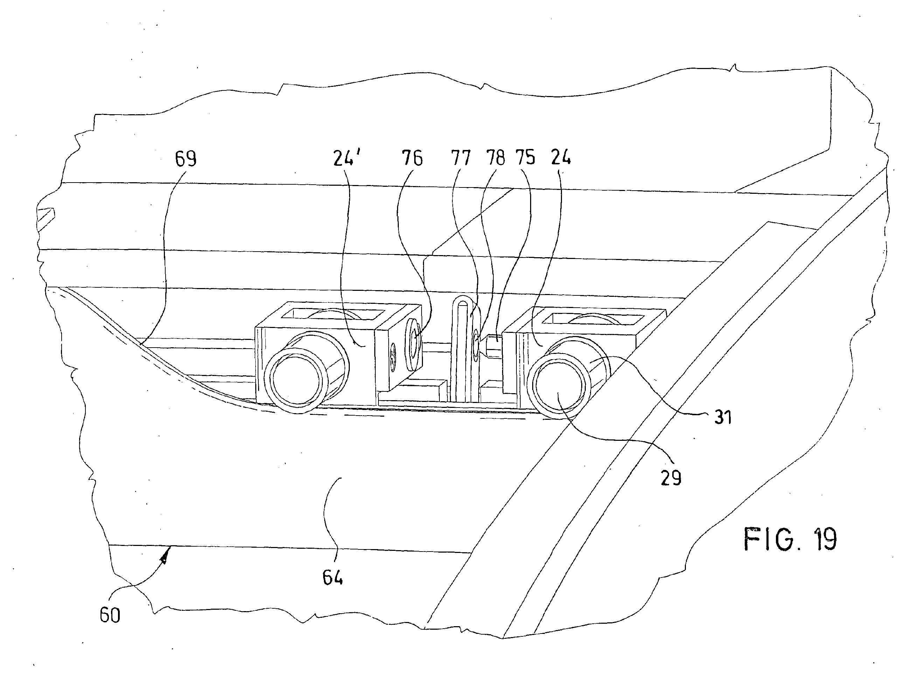

- Fig. 19: in perspektivischer Draufsicht der Mittelbereich der hinteren Führung bei sich annähernden Seitenholmen, und
- Fig. 20: in perspektivischer Draufsicht der Mittelbereich der hinteren Führung mit den in ihrer Innenstellung angeordneten Seitenholmen und wieder hochgeschwenkter Blende.

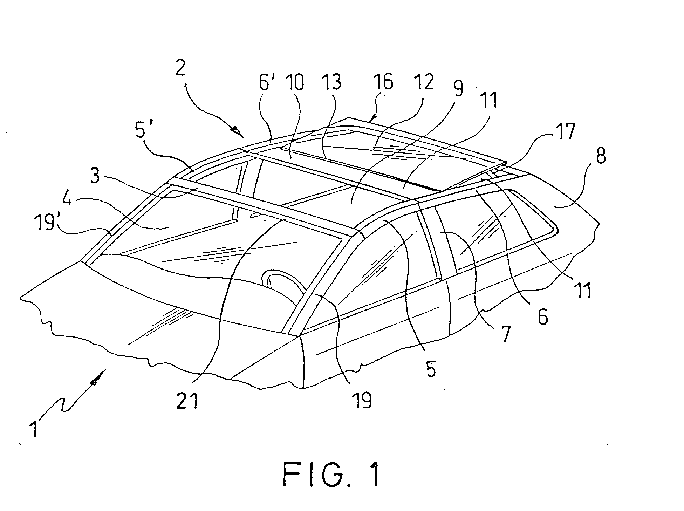

Ein Fahrzeug 1 (siehe Fig. 1) enthält ein Fahrzeugdach 2 mit einer Dachrahmenanordnung, die einen vorderen Dachquerholm oder Windlauf 3 oberhalb einer Frontscheibe 4 und beidseits jeweils einen vorderen bewegbaren Seitenholm 5 und 5' und einen dachfesten hinteren Seitenholm 6 und 6' aufweist, der sich etwa von der B-Säule 7 bis zur C-Säule 8 erstreckt. Eine Dachöffnung 9 erstreckt sich zwischen dem Windlauf 3 und den beiden bewegbaren Seitenholmen 5 und 5' und wird rückseitig von einem hinteren Dachquerholm 10 begrenzt, der mit den hinteren Seitenholmen 6 und 6' oder den B-Säulen 7 fest verbunden ist. Ein hinterer fester Dachabschnitt 11 erstreckt sich zwischen den hinteren Seitenholmen 6 und 6' und vom hinteren Dachquerholm 10 bis an einen weiteren Dachquerholm am Ende des Fahrzeugdaches 2 oberhalb der Heckscheibe.

Ein Deckel 12, z. B. ein Glasdeckel, eines außengeführten Schiebedaches ist zum Verschließen und zumindest teilweisen Freigeben der Dachöffnung 9 vorgesehen. Der Deckel 12 ist im Bereich seines Vorderrandes 13 beidseits mittels einer Lagereinheit an einer jeweiligen Führungseinrichtung verschiebbar gelagert, die eine Führungsschiene 14 am vorderen Seitenholm 5, 5' und eine weitere Führungsschiene 15 am hinteren Seitenholm 6, 6' aufweist. Im Bereich seines Hinterrandes 16 ist der Deckel 12 seitlich mittels einer Lagereinheit 17 an einer jeweiligen Führungseinrichtung verschiebbar gelagert, die eine Führungsschiene 18 am hinteren Seitenholm 6, 6' aufweist. Zum Freigeben der Dachöffnung 9 wird der Deckel 12 mittels der Lagereinheiten 17 an seinem Hinterrand 16 angehoben und nach hinten über den hinteren festen Dachabschnitt 11 verfahren (Stellung gemäß Fig. 1). Ein derartiger Deckel 12 mit Lagereinrichtung und Antriebsmechanik ist in der DE 197 13 347 C1 offenbart und wird daher hier nicht näher erläutert.

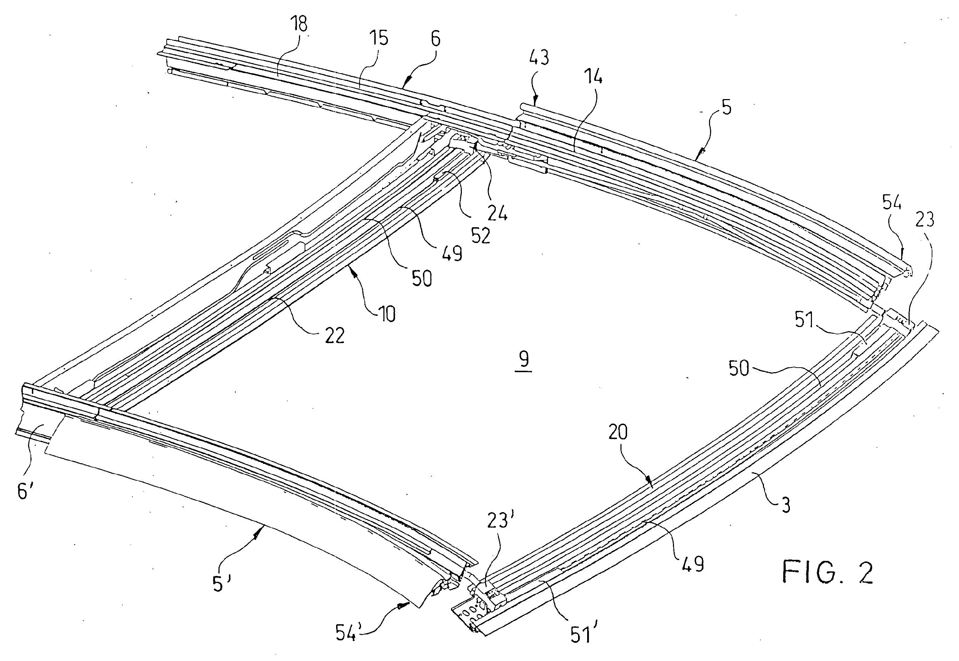

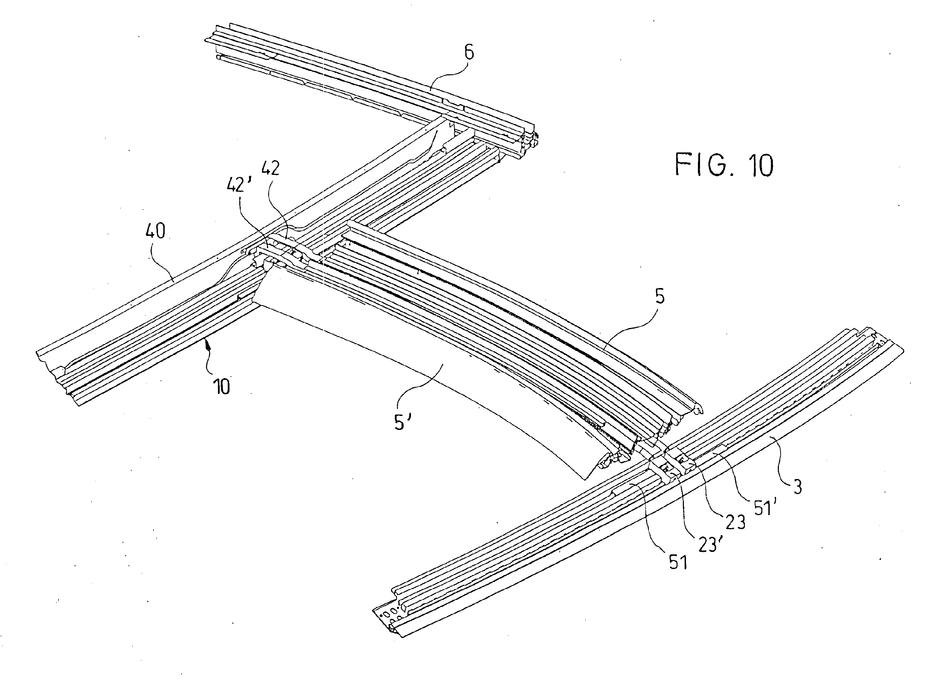

Jeder vordere Seitenholm 5, 5' ist aus seiner Funktions- oder Außenstellung (siehe Fig. 1 und 2), in der er die A-Säule 19, 19' bzw. den Windlauf 3 mit dem festen hinteren Seitenholm 6, 6' verbindet und die Führungsschiene 14 zum Lagern bzw. Verschieben des Deckels 12 bereitstellt, in eine Innenstellung (siehe Fig. 10) verlagerbar, sobald der Deckel 12 in einer hinteren Offenstellung angeordnet ist und ohne Lagereingriff mit der Führungsschiene 14 ist (Fig. 1). Der Dachaufbau ist bezüglich der vertikalen Fahrzeuglängsmittelebene im wesentlichen symmetrisch, so daß die Beschreibung der beiden bewegbaren Seitenholme 5 und 5' und der Lager- und Antriebseinrichtungen überwiegend anhand des linken Seitenholms 5 erfolgt (der rechte Seitenholm 5' ist in einigen Figuren nicht dargestellt).

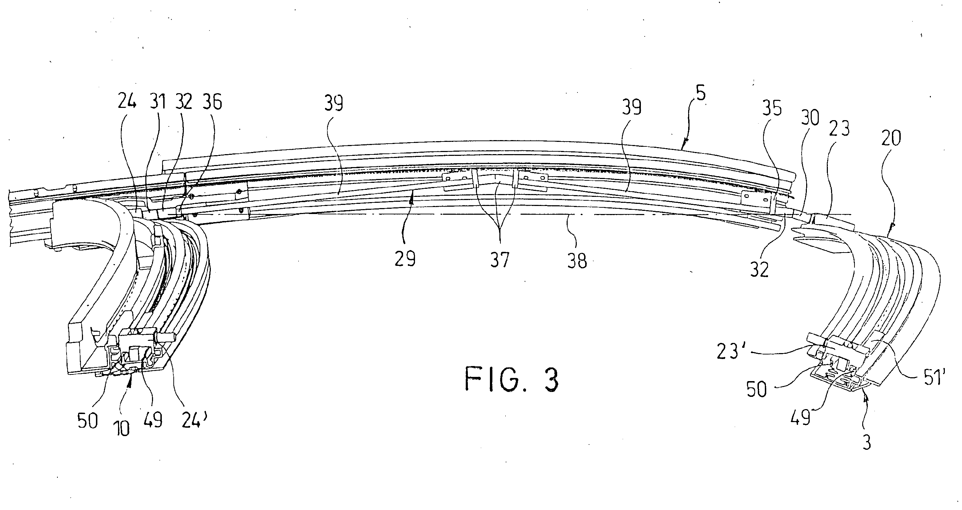

Der Windlauf 3 weist eine Führungsschiene 20 auf, die sich zwischen den beiden A-Säulen 19, 19' über die gesamte Länge des Windlaufs 3 erstreckt. Entsprechend der häufig üblichen Form eines Personenkraftwagens bzw. dessen Fahrzeugdaches verläuft der Oberrand 21 der Frontscheibe 4 entlang einer dreidimensionalen Kurve mit insbesondere nach vorne und nach oben gewölbtem Mittelabschnitt (in Fig. 1 ist der Oberrand jedoch vereinfacht als Gerade dargestellt). Dementsprechend ist der Windlauf 3 wie auch die daran angebrachte Führungsschiene 20 ein dreidimensional gewölbtes oder gekrümmtes Bauteil (siehe z. B. die Fig. 2 und 3).

Der hintere Dachquerholm 10, der vergleichbar dem Windlauf 3 ein dreidimensional gewölbtes Bauteil ist, weist ebenfalls eine Führungsschiene 22 auf, die dem Verlauf des hinteren Dachquerholms 10 angepaßt ist.

An der vorderen Führungsschiene 20 wie auch an der hinteren Führungsschiene 22 ist zum verschiebbaren Lagern jedes der beiden bewegbaren vorderen Seitenholme 5, 5' jeweils ein vorderer Steuerschlitten 23 und 23' und ein hinterer Steuerschlitten 24 und 24' verschiebbar gelagert. Am vorderen Steuerschlitten 23, 23' ist ein Zahnrad 25, 25' drehbar gelagert, das an einer an der vorderen Führungsschiene 20 gebildeten Verzahnung 26, z. B. an einer daran angebrachten oder ausgebildeten Zahnstange, in Eingriff ist. In gleicher Weise ist am hinteren Steuerschlitten 24 bzw. 24' ein Zahnrad 27 bzw. 27' drehbar gelagert, das an einer an der hinteren Führungsschiene 22 gebildeten Verzahnung 28, z. B. an einer daran angebrachten oder ausgebildeten Zahnstange, in Eingriff ist.

Eine jeweilige Kardangelenkeinrichtung 29 verbindet den vorderen Steuerschlitten 23, 23' und den hinteren Steuerschlitten 24, 24' des jeweiligen Seitenholms 5 bzw. 5' miteinander und koppelt deren Zahnräder 25 und 27 bzw. 25' und 27' drehfest miteinander. Die Kardangelenkeinrichtung 29 enthält ein vorderes Endstück 30, das an dem vorderen Steuerschlitten 23 koaxial zur Drehachse des Zahnrades 25 angebracht ist, ein hinteres Endstück 31, das an dem hinteren Steuerschlitten 24 koaxial zur Drehachse des Zahnrades 27 angebracht ist, und ein Mittelstück 32, das an einer vorderen Gelenkstelle 33 und einer hinteren Gelenkstelle 34 mit dem vorderen bzw. dem hinteren Endstück 30 bzw. 31 gelenkig verbunden ist. Der Seitenholm 5 ist an dem Mittelstück 32 der Kardangelenkeinrichtung 29 mittels einer vorderen Lagerung 35, einer hinteren Lagerung 36 und einer mittleren Lagerung 37 gelagert, so daß er um eine Schwenkachse 38, die durch die vordere und die hintere Gelenkstelle 33 und 34 der Kardangelenkeinrichtung 29 verläuft, relativ zum Fahrzeugdach bzw. dem vorderen und dem hinteren Steuerschlitten 23 und 24 schwenkbar ist. Eine Kardanwelle 39 der Kardangelenkeinrichtung 29, die die beiden Zahnräder 25 und 27 miteinander koppelt, ist dementsprechend mehrteilig gebildet und ist im vorderen Endstück 30 und im hinteren Endstück 31 drehbar gelagert. Das vordere Endstück 30 der Kardangelenkeinrichtung 29 bzw. die Kardanwelle enthält eine Einrichtung zum Längenausgleich (nicht dargestellt), so daß die wirksame Länge der Kardangelenkeinrichtung 29 veränderbar ist und sich an variierende Abstände zwischen der vorderen Führungsschiene 20 und der hinteren Führungsschiene 22 anpassen kann. Statt der dargestellten mittleren Lagerung 37 mit nur einer Gelenkstelle der Kardangelenkeinrichtung 29 können insbesondere bei einem stärker gekrümmten Seitenholm 5 auch mehrere mittlere Lagerungen zur Verbindung der Kardangelenkeinrichtung 29 mit dem Seitenholm 5 und dementsprechend eine mehrfache Unterteilung bzw. Umlenkung der Kardanwelle 39 vorgesehen sein, so daß der Verlauf der Kardanwelle 39 an die Form des Seitenholmes 5 angepaßt werden kann. Dies ist insbesondere bei einem stärker gebogenen Seitenholm zweckmäßig.

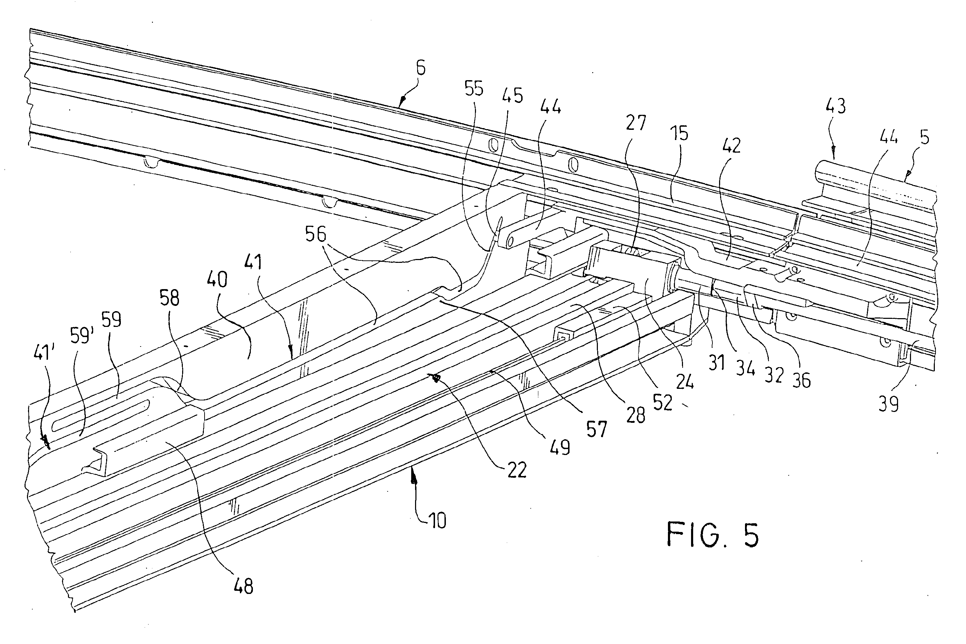

Der hintere Dachquerholm 10 enthält eine sich zwischen den beiden festen Seitenholmen 6 und 6' erstreckende Steuerkulisse 40 (siehe Fig. 5) mit einer Steuerbahn 41 und 41' für jeden bewegbaren Seitenholm 5 und 5'. Ein Halteteil 42, das über das Hinterende 43 des Seitenholms 5 nach hinten hinaus ragt, enthält einen sich einwärts erstreckenden Steuerarm 44, an dessen Ende ein Steuerbolzen 45 angeordnet ist. Der Steuerbolzen 45 ist in der diesem Seitenholm 5 zugeordneten Steuerbahn 41 der Steuerkulisse 40 verschiebbar aufgenommen und daran geführt. Die jeweilige Position des Steuerbolzens 45 relativ zum hinteren Steuerschlitten 24 und der Schwenkachse 38 des Seitenholms 5 legt eine Schwenkstellung des Seitenholms 5 um die Schwenkachse 38 fest.

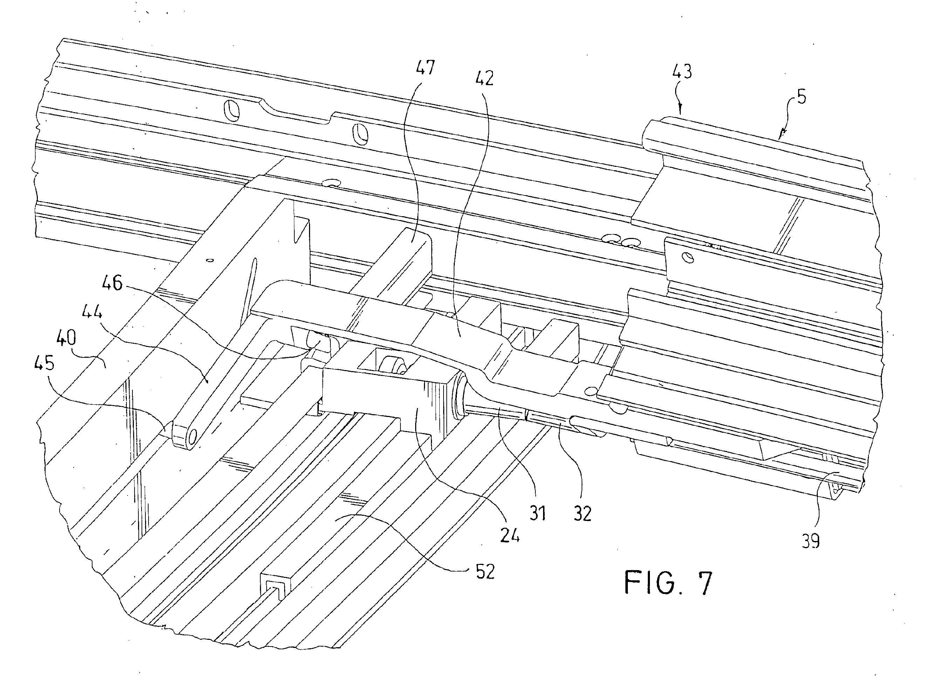

Am Steuerarm 44 oder am Halteteil 42 ist zusätzlich ein Abstützbolzen 46 angeordnet (Fig. 7), der koaxial zur Schwenkachse 38 des Seitenholms 5 liegt und somit beim Verschwenken des Seitenholms 5 nicht aus der Schwenkachse 38 heraus bewegt wird. Der hintere Dachquerholm 10 enthält an seinen beiden Außenenden jeweils eine U-förmige, nach hinten offene Kulisse 47 von begrenzter Länge, in der der Abstützbolzen 46 in und nahe der Außenstellung des Seitenholms 5 spielfrei aufgenommen ist. Eine entsprechende mittlere Kulisse 48 (Fig. 5) ist in der Mitte des hinteren Dachquerholms 10 angebracht und führt die Abstützbolzen 46 der beiden Seitenholme 5 und 5' in deren Innenstellung spielfrei.

Die vordere Führungsschiene 20 wie auch die hintere Führungsschiene 22 weisen jeweils zwei insbesondere nach oben gerichtete Führungsstege 49 und 50 auf, die beidseits der Verzahnung 26 bzw. 28, d. h. bezüglich der Fahrzeuglängsachse vor bzw. hinter der Verzahnung 26 bzw. 28, angeordnet sind. Die beiden vorderen Steuerschlitten 23 und 23' weisen jeweils eine zur Fahrzeugmitte hin gerichtete Führungsverlängerung 51 bzw. 51' auf, die z. B. als U-förmiges Profil gebildet ist und an dem jeweiligen Führungssteg 49 bzw. 50 anliegt bzw. diesen von oben umgreift. Dabei ist beispielsweise die Führungsverlängerung 51 am linken vorderen Steuerschlitten 23 derart angeordnet, daß sie am hinteren Führungssteg 50 gelagert ist, während die Führungsverlängerung 51' am rechten vorderen Steuerschlitten 23' derart angeordnet, daß sie am vorderen Führungssteg 49 gelagert ist. In der Innenstellung der beiden Seitenholme 5 und 5' (Fig. 10), in der sie in Dachmitte aneinander anliegen, können die beiden Führungsverlängerungen 51 und 51' daher parallel nebeneinander positioniert werden. Die beiden hinteren Steuerschlitten 24 und 24' weisen dementsprechend gebildete Führungsverlängerungen 52 bzw. 52' in entsprechender Anordnung auf.

Die beiden hinteren Steuerschlitten 24 und 24' sind jeweils mit einem an der hinteren Führungsschiene 22 geführten drucksteifen Antriebskabel 53 bzw. 53', wie es von Schiebedachantrieben bekannt ist, verbunden. Die beiden Antriebskabel 53 und 53' werden von einem gemeinsamen Antriebsmotor synchron angetrieben. Wenn der hintere Steuerschlitten 24 mittels des Antriebskabels 53 entlang der hinteren Führungsschiene 22 verschoben wird, überträgt die Kardanwelle 39 der Kardangelenkeinrichtung 29 die Rotation des hinteren Zahnrades 27 auf das vordere Zahnrad 25, so daß dieses den vorderen Steuerschlitten 23 gleichzeitig mit dem hinteren Steuerschlitten 24 verschiebt.

Da aufgrund der Form des Fahrzeugdaches die beiden außenseitigen Enden des Windlaufs 3 gegenüber den beiden Enden des hinteren Dachquerholms 10 weiter außen liegen und dementsprechend auch jeder bewegbare Seitenholm 5, 5' in seiner Außenstellung ein bezüglich der vertikalen Fahrzeuglängsmittelebene weiter außen angeordnetes Vorderende 54 aufweist, muß beim Verfahren des Seitenholms 5, 5' aus seiner Außenstellung in seine Innenstellung, in der die beiden Seitenholme 5, 5' in etwa parallel zur vertikalen Fahrzeuglängsmittelebene angeordnet sind und aneinander anliegen, das Vorderende 54 des Seitenholms 5 im Vergleich zu seinem Hinterende 43 einen größeren Weg entlang der vorderen Führungsschiene 20 zurücklegen. Da die Kardanwelle 39 beim Verschieben des Seitenholms 5, 5' an ihrem Vorderende und ihrem Hinterende dieselbe Rotation aufweist, müssen die jeweiligen Einheiten aus Zahnrad 25 und Zahnstange 26 bzw. Zahnrad 27 und Zahnstange 28 an dem vorderen und dem hinteren Steuerschlitten 23 bzw. 24 unterschiedlich gestaltet sein, damit der vordere Steuerschlitten 23 gegenüber dem hinteren Steuerschlitten 24 eine dementsprechend größere Wegstrecke zurücklegen kann. Im dargestellten Ausführungsbeispiel sind die beiden Verzahnungspaarungen mit unterschiedlichem Modul gebildet, so daß bei gleicher Rotationsgeschwindigkeit das vordere Zahnrad 25 gegenüber dem hinteren Zahnrad 27 eine größere Wegstrecke zurücklegt. Beispielsweise weist das hintere Zahnrad 27 fünfzehn Zähne und einen Teilkreisdurchmesser von 15 mm bei einem Modul von 1,0 auf, wohingegen das vordere Zahnrad 25 bei ebenfalls fünfzehn Zähnen einen Teilkreisdurchmesser von 15,47 mm bei einem Modul von 1,03 aufweist.

Um die Dachöffnung 3 vollständig freizulegen, wird der Deckel 12 aus seiner Schließstellung mittels einer Antriebseinrichtung entlang der Führungen 14 und 15 an den Seitenholmen 5, 5' bzw. 6 und 6' nach hinten und dabei über den hinteren Dachabschnitt 11 in seine Offenstellung verfahren, in der seine Lagereinrichtung außer Eingriff mit den Führungen 14 der vorderen Seitenholme 5, 5' ist. Anschließend wird die Antriebseinrichtung für die beiden Seitenholme 5, 5' aktiviert, so daß die beiden Antriebskabel 53, 53' die beiden hinteren Steuerschlitten 24 und 24' einwärts verschieben. Am linken Seitenholm 5 wird dabei zunächst der Steuerbolzen 45 in einem steil abwärts verlaufenden äußeren Bahnabschnitt 55 der Steuerbahn 41 (siehe Fig. 5) nach unten bewegt, so daß der Steuerarm 44 und das Halteteil 42 und damit der Seitenholm 5 verschwenkt werden.

Auf diese Weise wird auf dem einwärts gerichteten ersten Verschiebeweg des hinteren Steuerschlittens 24, dessen Bewegung durch die Kardanwelle 39 gleichzeitig auf den vorderen Steuerschlitten 23 übertragen wird, der Seitenholm 23 während seiner Einwärtsverlagerung um seine Schwenkachse 38 verschwenkt, wobei seine Außenseite angehoben wird und er aus seiner Anlage an einer Dichtungsanordnung am Windlauf 3 bzw. am hinteren Seitenholm 6 angehoben wird.

Die Steuerbahn 41 weist anschließend an den steil nach unten geneigten ersten, äußeren Bahnabschnitt 55 einen im wesentlichen parallel zur hinteren Führungsschiene 22 verlaufenden zweiten Bahnabschnitt 56 auf. Wenn der Steuerbolzen 45 sich entlang dieses zweiten Bahnabschnitts 56 bewegt, behält der Seitenholm 5 bei seiner Einwärtsverschiebung seine Schwenkstellung im wesentlichen bei. Ein kleiner Absatz 57 auf dem zweiten Bahnabschnitt 56 und ein nachfolgend höher liegender Bahnabschnitt 56 kann eine geringfügige Rückschwenkung des Seitenholms 5 bewirken. Gegen die Dachmitte hin enthält die Steuerbahn 41 einen ansteigenden dritten Bahnabschnitt 58, der in einen dachmittigen vierten Bahnabschnitt 59 übergeht, der wieder parallel zur Führungsschiene 22 verläuft. Der in dem ansteigenden dritten Bahnabschnitt 58 aufwärts geführte Steuerbolzen 45 verschwenkt den Seitenholm 5 wieder zurück in oder nahezu in seine Schwenkstellung, die er in seiner Außenstellung einnimmt und die er nun auch wieder in seiner dachmittigen End- oder Innenstellung einnimmt, in der der Steuerbolzen 45 im vierten Bahnabschnitt 59 geführt ist. Auf dem letzten Verschiebeweg des Seitenholmes 5 bzw. der Steuerschlitten 23 und 24 tritt der Abstützbolzen 46 in die mittlere Kulisse 48 ein und bietet zusätzlich eine sichere Lagerung des hinteren Steuerschlittens 24 und damit des Seitenholms 5 in seiner Innenstellung.

Der rechte Seitenholm 5' ist mittels der Steuerbahn 41', die im wesentlichen entsprechend der Steuerbahn 41 des linken Seitenholms 5 gebildet ist, in seiner Schwenkstellung entsprechend dem linken Seitenholm 5 verstellbar. Der vierte Bahnabschnitt 59' verläuft jedoch unterhalb des vierten Bahnabschnitts 59 des linken Seitenholms 5, damit sich die Steuerbolzen 46 und 46' in den Innenstellungen der beiden Seitenholme 5 und 5' aneinander vorbei bewegen können. Die Steuerbahn 41' des rechten Seitenholms 5' ist beispielsweise in ihrer Gesamtheit bei ansonsten gleicher Ausbildung weiter unten und damit näher zur hinteren Führungsschiene 22 gebildet. Der Schwenkmechanismus ist dementsprechend angepaßt, um ein gleichartiges Verschwenken des rechten Seitenholms 5' zu ermöglichen. Im übrigen wird der rechte Seitenholm 5' synchron zum linken Seitenholm 5 bewegt und verschwenkt. In seiner Innenstellung ist der rechte Seitenholm 5' mittels des in der mittleren Kulisse 48 aufgenommenen Steuerbolzens 46' zusätzlich gesichert. Die Rückbewegung der beiden Seitenholme 5 und 5' erfolgt in entgegengesetztem Bewegungsablauf.

In Abwandlung des Ausführungsbeispiels können auch hintere Seitenholme des Fahrzeugdaches, die eine hintere Dachöffnung seitlich umfassen, bewegbar gebildet sein. Dann kann auch entgegen dem beschriebenen Ausführungsbeispiel die Führung an einem hinteren Dachquerholm länger sein wie die Führung an einem vorderen Dachquerholm.

Statt der Kardangelenkeinrichtung 29 mit der Kardanwelle 39 kann auch eine flexible drehfeste Drehantriebswelle verwendet werden, die in einem Rohr aufgenommen ist. Der Seitenholm ist dann an dem Rohr an einer oder an mehreren Stellen befestigt.

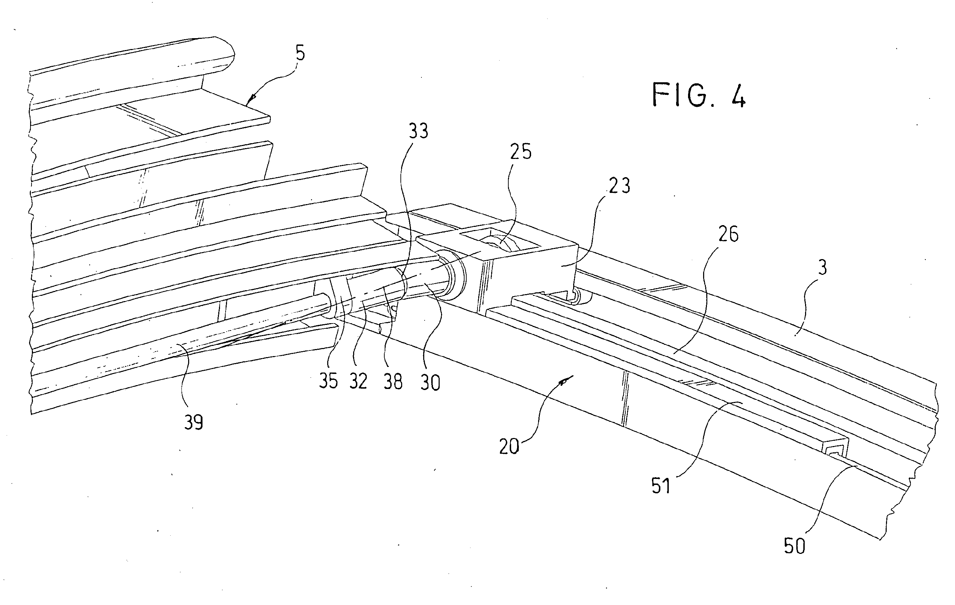

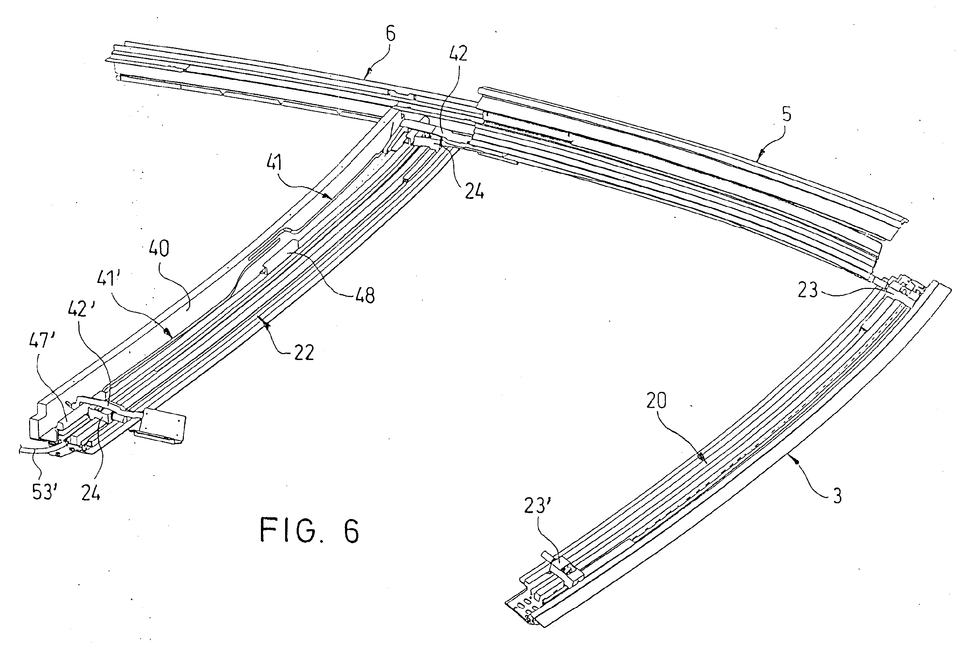

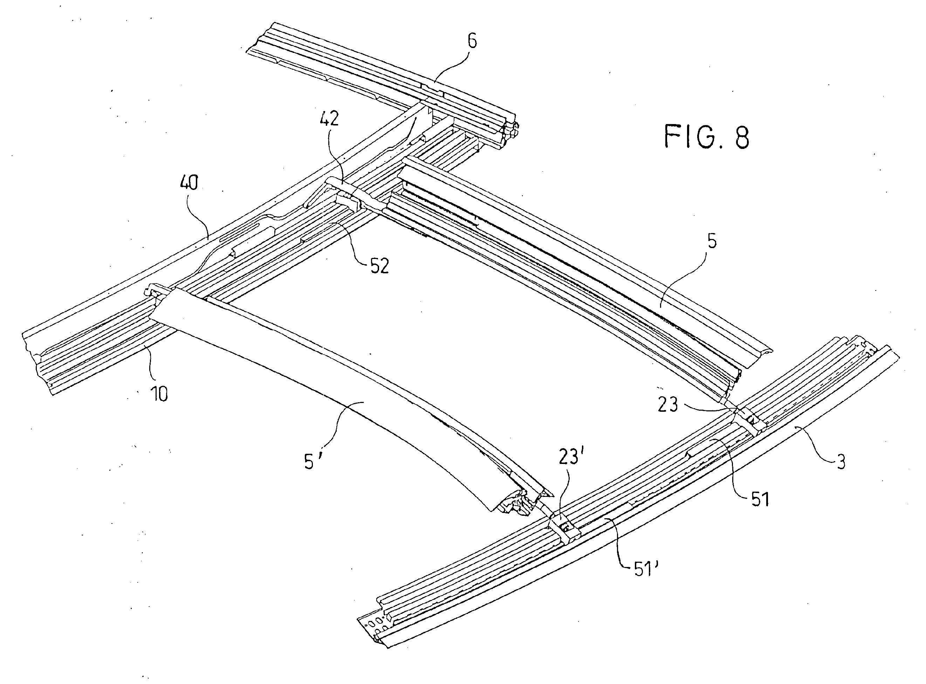

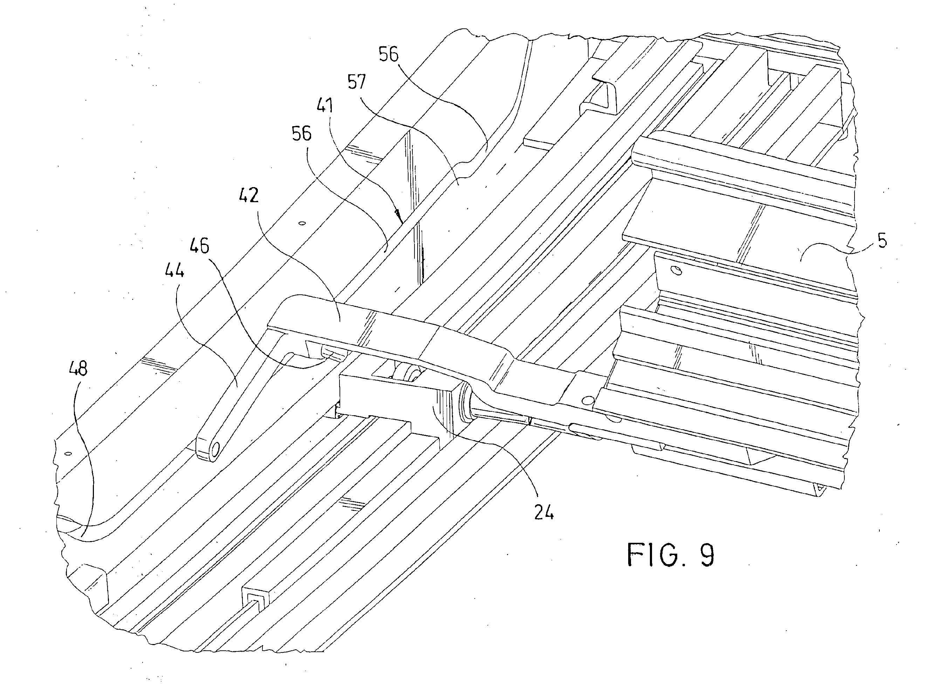

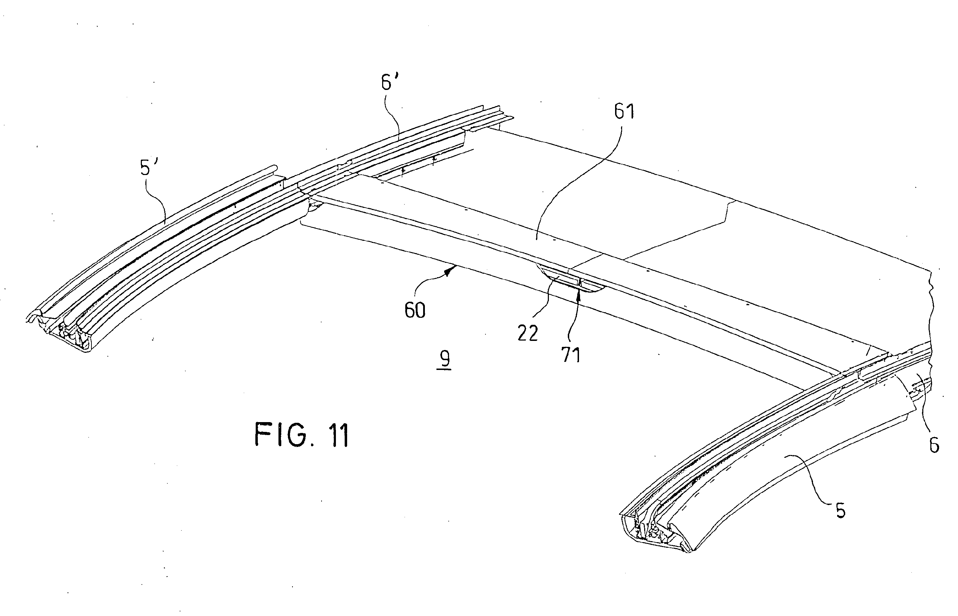

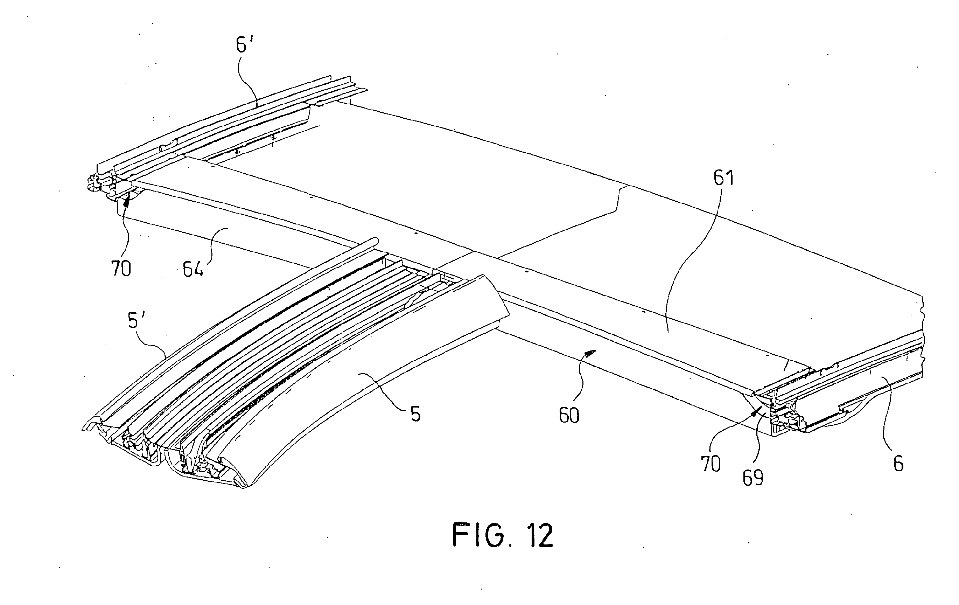

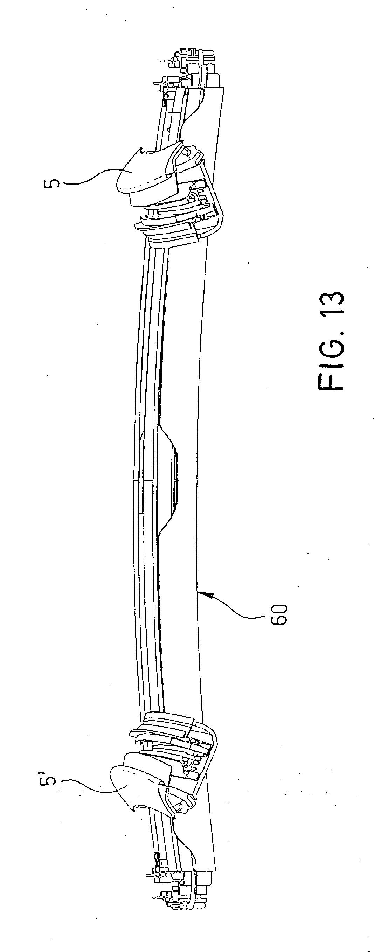

Um die hintere Führungsschiene 22 vorderseitig zur Dachöffnung 9 hin abzudecken, ist eine Abdeckeinrichtung mit einer bewegbaren Blende 60 vorgesehen, die in einer Schließ- oder Abdeckstellung vor der hinteren Führungsschiene 22 angeordnet ist und an einer oberen Abdeckplatte 61 des hinteren Dachquerholms 10 angrenzt, wenn die beiden Seitenholme 5, 5' in ihrer äußeren Stellung (siehe Fig. 11) oder in ihrer inneren Stellung (siehe Fig. 12) angeordnet sind, und die nach unten in eine Offenstellung bewegt ist, wenn sich die beiden Seitenholme 5 und 5' beim Verstellen zwischen der äußeren und der inneren Stellung befinden (siehe Fig. 13, in den Figuren 1 bis 10 ist die Blende 60 und die Abdeckplatte 61 nicht dargestellt).

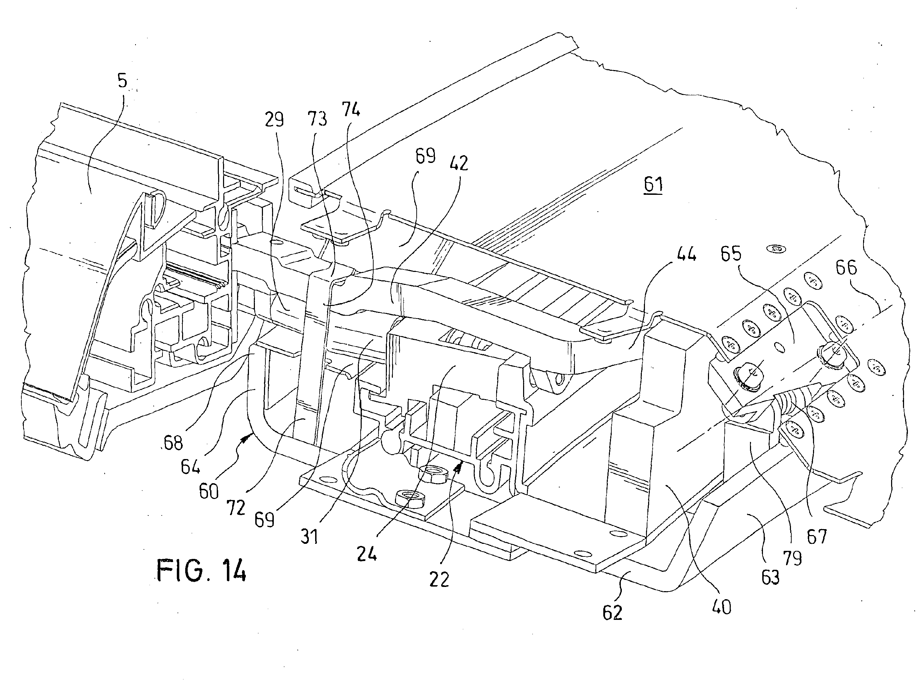

Die Blende 60 ist ein im Querschnitt U-förmiges oder trogförmiges Bauteil (siehe Fig. 14) mit einem im Einbauzustand in etwa horizontal angeordneten Mittelabschnitt 62, einem hinteren nach oben gerichteten Schenkel 63 und einem vorderen in etwa vertikal nach oben verlaufenden vorderen Schenkel 64, und sie erstreckt sich zwischen den beiden festen hinteren Seitenholmen 6, 6' in etwa über die gesamte Länge des hinteren Dachquerholms 10. Im Bereich des hinteren Schenkels 63 ist beidseits benachbart zum jeweiligen hinteren Seitenholm 6 ein Lagersteg 79 angeformt oder angebracht, mit dem die Blende 60 an einem Lager oder Scharnier 65 um eine Querachse 66 schwenkbar gelagert ist. Eine Feder 67 im Bereich des Lagers oder Scharniers 65 spannt die Blende 60 nach oben in ihre Schließstellung (siehe z. B. die Fig. 11 und 14) vor. Das jeweilige Lager oder Scharnier 65 ist am hinteren Dachquerholm 10 und insbesondere an der Steuerkulisse 40 oder der Abdeckung 61 befestigt.

Am Oberrand 68 des vorderen Schenkels 64 der Blende 60 ist ein streifenförmiges Steuerblech 69 angebracht, das sich über die Länge des vorderen Schenkels 64 erstreckt und das z. B. an den beiden Endabschnitten breiter gebildet ist wie auf dem dazwischenliegenden Mittelabschnitt. An seinen beiden äußeren Endabschnitten ist der Oberrand 68 des vorderen Schenkels 64 einem Kurvenverlauf folgend abgesenkt, so daß am vorderen Schenkel 64 jeweils eine seitliche Vertiefung oder Aussparung 70 gebildet ist. Dachmittig weist der vordere Schenkel 64 der Blende 60 eine zentrale Vertiefung oder Aussparung 71 (siehe Fig. 11) auf, die durch entsprechendes Absenken des Oberrandes 68 gebildet ist. Das Steuerblech 69 folgt kontinuierlich dem Oberrand 68 des vorderen Schenkels 64 auch bei den Aussparungen 70 und 71.

Die Blende 60 enthält an ihrem jeweiligen seitlichen Ende einen Riegel 72 (Fig. 14), der z. B. in der Form eines federelastischen Verriegelungsblechs gebildet ist und der sich vom Mittelabschnitt 62 nach oben erstreckt und an seinem freien oberen Ende einen einwärts umgebogenen Riegelabschnitt 73 aufweist.

Wenn die beiden vorderen bewegbaren Seitenholme 5,5' in ihrer Außenstellung angeordnet sind (Fig. 11, 14), ist die Blende 60 in ihre Schließstellung nach oben vorgespannt. Dabei erstreckt sich das den Steuerarm 44 tragende Halteteil 42 und die Kardangelenkeinrichtung 29 durch die Aussparung 70 der Blende 60 und das Steuerblech 69 liegt an dem hinteren Endstück 31 der Kardangelenkeinrichtung 29, das z. B. eine drehbare Hülse aufweist, durch Federvorspannung an. Der Riegelabschnitt 73 des Riegels 72 hintergreift das Halteteil 42, so daß die Blende 60 in ihrer oberen Schließstellung gehalten ist und nicht abwärts verschwenkt werden kann. Der Riegel 72 stützt sich mit einer Anlagefläche 74 an einem dachseitigen festen Anschlag ab, z. B. an der Führungsschiene 15 am hinteren Seitenholm 6.

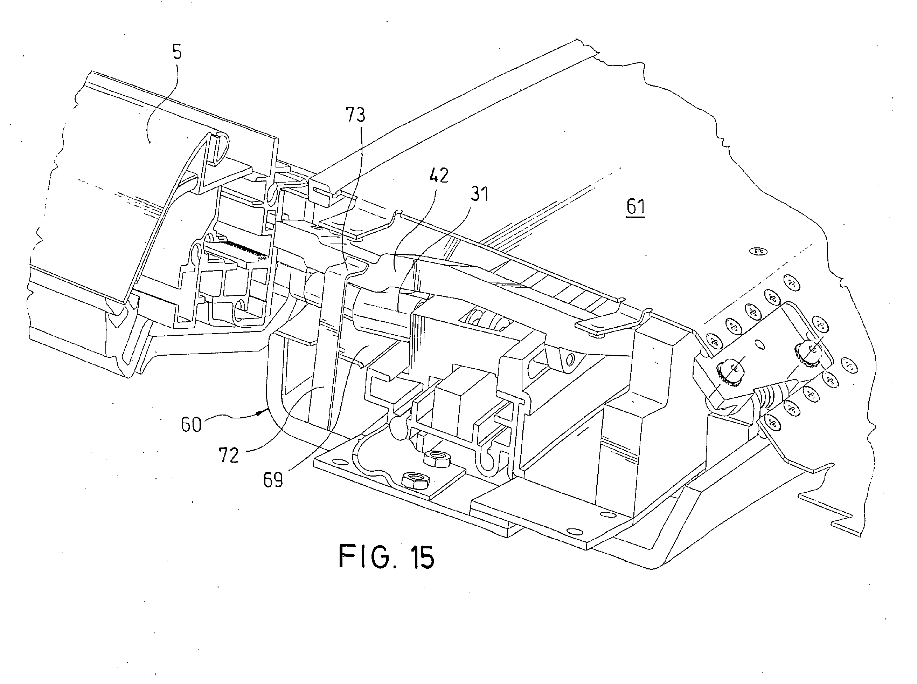

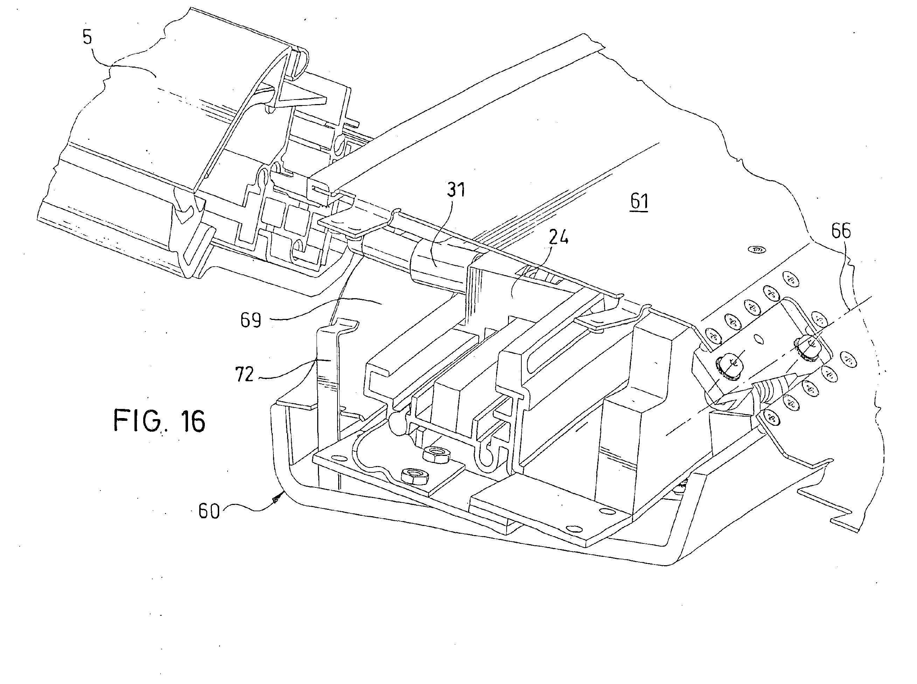

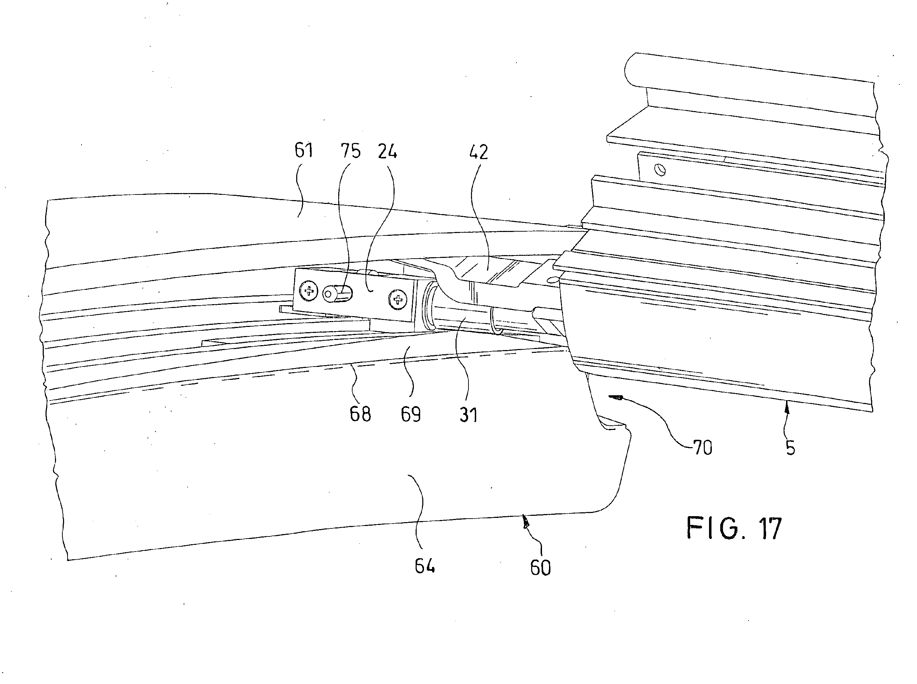

Wenn der hintere Steuerschlitten 24 und damit der Seitenholm 5 an der Führungsschiene 22 nach innen bewegt wird, bewegt sich das Halteteil 42 vom Riegel 72 weg (nach beispielsweise 10 mm Bewegungsweg, siehe Fig. 15), während sich das hintere Endstück 31 bzw. die Hülse auf dem ersten, äußeren, in etwa horizontalen Abschnitt des Steuerblechs 69 bewegt. Damit ist der Riegel 72 frei und die Blende 60 kann nun um die Querachse 66 nach unten geschwenkt werden, wenn im weiteren Bewegungsverlauf das hintere Endstück 31 bzw. die Hülse im Gleitkontakt am Steuerblech 69 dieses und damit die Blende 60 nach unten drückt (siehe Fig. 16 und 17).

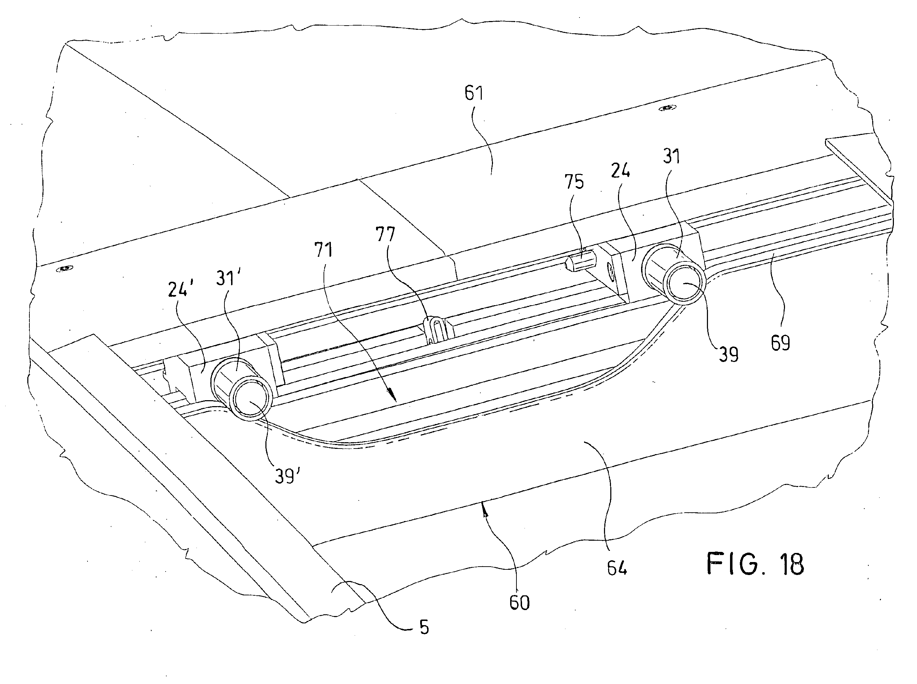

Wenn sich der Seitenholm 5 seiner Innen- oder Mittelstellung annähert (siehe Fig. 18, in der der Seitenholm 5 nicht dargestellt ist), kommt der hintere Steuerschlitten 24 und damit das hintere Endstück 31 bzw. die Hülse in den Bereich der zentralen Aussparung 71 und in Gleitkontakt am abwärts verlaufenden Steuerblech 69 schwenkt die Blende 60 wieder nach oben in ihre Schließstellung.

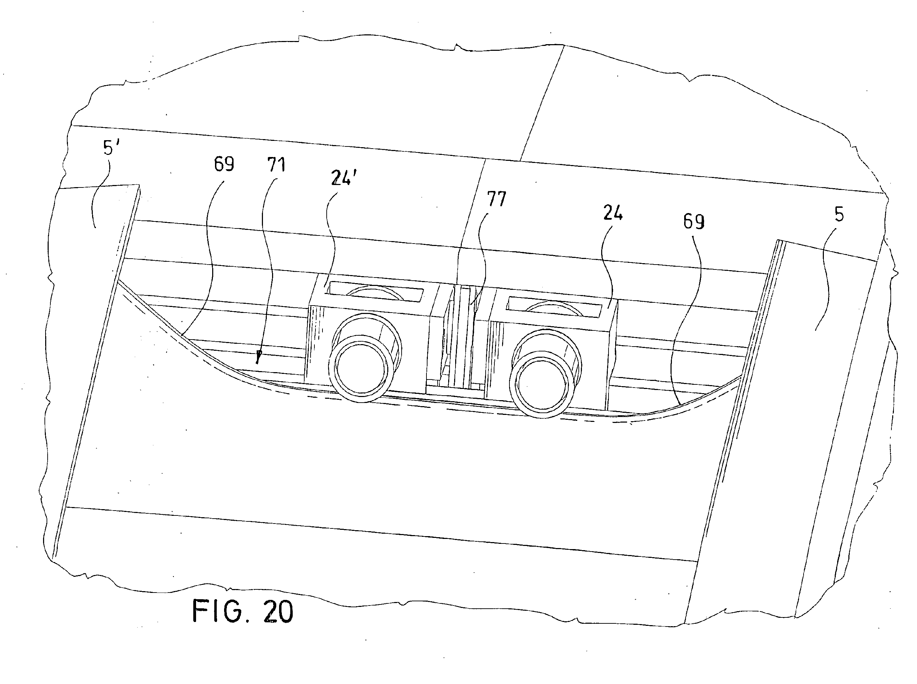

Der Steuerschlitten 24 des linken Seitenholms 5 weist einen Verriegelungsstift 75 auf, der in Richtung zu dem gegenüberliegenden Steuerschlitten 24' des rechten Seitenholms 5' hervorsteht und zum Riegeleingriff in einer Riegelaufnahme 76 am rechten Steuerschlitten 24' vorgesehen ist, wenn in der Innenstellung der beiden Seitenholme 5 und 5' die beiden Steuerschlitten 24, 24' nahe beieinander angeordnet sind (Fig. 20). Ein an der Blende 60 mittig angebrachtes Verriegelungsblech 77 erstreckt sich derart nach oben, daß es in der Innenstellung der beiden Seitenholme 5 und 5' zwischen den beiden Steuerschlitten 24, 24' angeordnet ist, wobei der Verriegelungsstift 75 durch eine Öffnung 78 im Verriegelungsblech 77 im wesentlichen spielfrei hindurchgreift und dieses damit verriegelt hält. Damit ist bei geöffnetem Dach und einwärts hält. Damit ist bei geöffnetem Dach und einwärts verfahrenen Seitenholmen 5, 5' die Blende 60 in ihrer Schließstellung mittig verriegelt.

### Bezugszeichenliste

- 1: Fahrzeug
- 2: Fahrzeugdach
- 3: Windlauf
- 4: Frontscheibe
- 5: bewegbarer Seitenholm
- 6: hinterer Seitenholm
- 7: B-Säule
- 8: C-Säule
- 9: Dachöffnung
- 10: hinterer Dachquerholm
- 11: fester Dachabschnitt
- 12: Deckel
- 13: Vorderrand
- 14: Führungsschiene
- 15: Führungsschiene
- 16: Hinterrand
- 17: Lagereinheit
- 18: Führungsschiene
- 19: A-Säule
- 20: vordere Führungsschiene
- 21: Oberrand
- 22: hintere Führungsschiene
- 23: vorderer Steuerschlitten
- 24: hinterer Steuerschlitten
- 25: Zahnrad
- 26: Zahnstange
- 27: Zahnrad
- 28: Zahnstange
- 29: Kardangelenkeinrichtung
- 30: vorderes Endstück
- 31: hinteres Endstück
- 32: Mittelstück
- 33: vordere Gelenkstelle
- 34: hintere Gelenkstelle
- 35: vordere Lagerung
- 36: hintere Lagerung
- 37: mittlere Lagerung
- 38: Schwenkachse
- 39: Kardanwelle
- 40: Steuerkulisse
- 41: Steuerbahn
- 42: Halteteil
- 43: Hinterende
- 44: Steuerarm
- 45: Steuerbolzen
- 46: Abstützbolzen
- 47: äußere Kulisse
- 48: mittlere Kulisse
- 49: Führungssteg
- 50: Führungssteg
- 51: Führungsverlängerung
- 52: Führungsverlängerung
- 53: Antriebskabel
- 54: Vorderende
- 55: erster äußerer Bahnabschnitt
- 56: zweiter Bahnabschnitt
- 57: Absatz
- 58: dritter Bahnabschnitt
- 59: vierter Bahnabschnitt
- 60: Blende
- 61: Abdeckplatte
- 62: Mittelabschnitt
- 63: hinterer Schenkel
- 64: vorderer Schenkel
- 65: Lager oder Scharnier
- 66: Querachse
- 67: Feder
- 68: Oberrand
- 69: Steuerblech
- 70: Aussparung
- 71: zentrale Aussparung
- 72: Riegel
- 73: Riegelabschnitt
- 74: Anlagefläche
- 75: Verriegelungsstift
- 76: Riegelaufnahme
- 77: Verriegelungsblech
- 78: Öffnung
- 79: Lagersteg

## Patentansprüche

1. Führung eines Fahrzeugteils, das mittels eines Lagerteils entlang der eine sichtseitige Abdeckung aufweisenden Führung bewegbar gelagert ist,
**dadurch gekennzeichnet,**
**daß** die Abdeckung als im wesentlichen starre und bewegbare Blende (60) gebildet ist, die mittels einer Verstelleinrichtung zwischen einer Abdeckstellung, in der sie die Führung (22) sichtseitig abdeckt, und einer Offenstellung, in der sie von der Führung (22) derart weg bewegt ist, daß sie die Bewegung des Lagerteils (24) entlang der Führung (22) gestattet, verstellbar ist.

2. Führung nach Anspruch 1,
**dadurch gekennzeichnet, daß** die Blende (60) um eine in etwa parallel zur Führung (22) verlaufende Schwenkachse (66) verschwenkbar ist.

3. Führung nach Anspruch 1 oder 2,
**dadurch gekennzeichnet, daß** die Blende (60) zumindest eine Aussparung (70 bzw. 71) aufweist, durch die sich bei geschlossener Blende (60) ein Lagerteil (29, 31, 42) des Seitenholms (5) erstreckt.

4. Führung nach Anspruch 3,
**dadurch gekennzeichnet, daß** die Aussparung (70 bzw. 71) am Ende der Blende (60) oder zwischen den Enden der Blende (60) gebildet ist.

5. Führung nach einem der Ansprüche 1 bis 4,
**dadurch gekennzeichnet, daß** die Blende (60) zumindest an einem Ende eine Riegeleinrichtung (72, 73) aufweist, die die Blende (60) in einer Endstellung des Fahrzeugteils (5) in ihrer Abdeckstellung hält.

6. Führung nach einem der Ansprüche 1 bis 5,
**dadurch gekennzeichnet, daß** die Blende (60) zwischen ihren Enden zumindest ein Riegelteil (77) aufweist, das die Blende (60) in ihrer Abdeckstellung hält.

7. Führung nach Anspruch 6,
**dadurch gekennzeichnet, daß** das zwischen den Enden der Blende (60) angeordnete zumindest eine Riegelteil (77) unter Mitwirkung eines Lagerteils (24, 75) des Fahrzeugteils (5) verriegelt gehalten ist.

8. Führung nach einem der Ansprüche 1 bis 7,
**dadurch gekennzeichnet, daß** die Blende im Querschnitt L- oder U-förmig ist, unter der am Fahrzeugdach insbesondere in Querrichtung angeordneten Führung (22) angebracht ist und ein nach oben stehender Schenkel (64) der Blende (60) beim Verschwenken der Blende (60) vor die Führung (22) in Abdeckstellung und wieder nach unten in Offenstellung schwenkbar ist.

9. Führung nach einem der Ansprüche 1 bis 8,
**dadurch gekennzeichnet, daß** die Blende (60) eine Steuerkurve (69) aufweist, an das Lagerteil (31) zum Verschwenken der Blende (60) in Steuereingriff ist.

10. Führung nach Anspruch 9,
**dadurch gekennzeichnet, daß** die Steuerkurve (69) an einem Abdeckschenkel (64) der Blende (60) angeordnet ist und einer Aussparung (70, 71) der Blende (60) folgt.

11. Führung nach einem der Ansprüche 1 bis 10,
**dadurch gekennzeichnet, daß** die Blende (60) für eine zwei Fahrzeugteile (5, 5') lagernde Führung (22) vorgesehen ist und entsprechend der in unterschiedlichen Stellungen positionierten Fahrzeugteile (5, 5') geöffnet oder geschlossen ist.

12. Führung nach einem der Ansprüche 1 bis 11,
**dadurch gekennzeichnet, daß** die Blende (60) für eine Führung (22) für zwei seitlich verschiebbare Seitenholme (5, 5') vorgesehen ist und in der äußeren Endstellung und in der inneren Endstellung der Seitenholme (5, 5') geschlossen ist.
